# EUROPEAN PATENT APPLICATION

(11) **EP 4 635 802 A1**
(43) Date of publication of application: **22.10.2025**
(21) Application number: 22968409.7
(22) Date of filing: 13.12.2022
(51) Int. Cl.: B60R 16/02

(54) **INFORMATION PROCESSING DEVICE OF UPDATE SYSTEM**

(71) Applicant: Astemo, Ltd., Tokyo 100-0004 (JP)
(72) Inventor: ARIYASU Nobuhiro, Hitachinaka-shi, Ibaraki 312-8503 (JP); MORITA Nobuyoshi, Tokyo 100-8280 (JP); FUJII Yasuhiro, Hitachinaka-shi, Ibaraki 312-8503 (JP); KATAOKA Mikio, Hitachinaka-shi, Ibaraki 312-8503 (JP)
(74) Representative: MERH-IP Matias Erny Reichl Hoffmann Patentanwälte PartG mbB
(86) International application number: PCT/JP2022/045835
(87) International publication number: WO 2024/127497

(57) **Abstract**

An object is to efficiently update some software modules provided in an in-vehicle device by SOTA while guaranteeing an operation of the software modules after the update. An information processing device 100 of an update system 1 is a device for updating an update target software module which is a part of a plurality of software modules provided in an in-vehicle device 110. The information processing device 100 includes a determination unit 101 that determines an update range of a software module in the plurality of software modules. The determination unit 101 determines the update range on the basis of whether or not the combination of the update target software module and other software modules after the update of the update target software module is a combination in which the operation of each software module has been verified.

## Description

### Technical Field

The present invention relates to an information processing device of an update system that updates a software module provided in an in-vehicle device.

### Background Art

In recent years, an automobile is equipped with a plurality of various electronic control units (ECUs). Each ECU controls various functions of the automobile by executing various software modules. In future automobiles, with a change in an E/E architecture, it is expected that enlargement of software modules due to integration of functions and enhancement of functions of ECUs progresses, and an update time and an update frequency of the software modules increase. For this reason, introduction of a software updates over the air (SOTA) function for updating some software modules among a plurality of software modules executed by each ECU has been studied.

As a technique for updating a software module of an ECU, for example, a technique disclosed in PTL 1 is known. In the technique disclosed in PTL 1, in a case where a software module is updated to be a combination inconsistent with versions of other software modules, the inconsistency is resolved by activating the software module before the update.

### Citation List

### Patent Literature

PTL 1: JP 2022-015169 A

### Summary of Invention

### Technical Problem

One purpose of updating a software module is to eliminate a vulnerability discovered in the software module before the update. In this case, it may be undesirable to activate the software module before the update as in the technique disclosed in PTL 1. In the technique disclosed in PTL 1, it is difficult to guarantee the operation of the software module after the update.

In addition, when the SOTA function for updating some software modules is introduced, it takes an operation verification time to perform operation verification on all combinations with other software modules after updating some software modules to guarantee the operation after the update, which is not easy. In particular, as the number of versions of the software modules increases, a combination pattern of the software modules becomes enormous, which makes the operation verification difficult. In the technique disclosed in PTL 1, there is no consideration in efficiently updating some software modules, and there is room for improvement.

The present invention has been made in view of the above, and an object of the present invention is to efficiently update some software modules provided in an in-vehicle device by SOTA while guaranteeing an operation of the software modules after the update.

### Solution to Problem

In order to solve the above problem, an information processing device of an update system according to the present invention is an information processing device of an update system for updating an update target software module which is a part of a plurality of software modules provided in an in-vehicle device. The information processing device includes: a determination unit that determines an update range of a software module in the plurality of software modules. The determination unit determines the update range on the basis of whether or not a combination of the update target software module and other software modules after update of the update target software module is a combination in which an operation of each software module has been verified.

### Advantageous Effects of Invention

According to the present invention, it is possible to efficiently update some software modules provided in the in-vehicle device by SOTA while guaranteeing the operation of the software modules after the update.

Problems, configurations, and effects other than those described above will be clarified by the following description of embodiments.

### Brief Description of Drawings

[FIG. 1] FIG. 1 is a diagram illustrating a configuration of an update system according to a first embodiment.
[FIG. 2] FIG. 2 is a table showing combinations of latest versions of software modules.
[FIG. 3] FIG. 3 is a table showing combinations of versions in which operation of software modules has been verified.
[FIG. 4] FIG. 4 is a table showing combinations of versions having an operation record of software modules in another in-vehicle device.
[FIG. 5] FIG. 5 is a flowchart illustrating processing of a determination unit illustrated in FIG. 1.
[FIG. 6] FIG. 6 is a diagram illustrating a configuration of an update system according to a second embodiment.
[FIG. 7] FIG. 7 is a flowchart illustrating processing of a determination unit included in an information processing device of an update system according to a third embodiment.

### Description of Embodiments

Hereinafter, embodiments of the present invention will be described with reference to the drawings. Note that configurations denoted by the same reference numerals in the embodiments have the same functions in the embodiments unless otherwise specified, and the description thereof will be omitted.

### [First Embodiment]

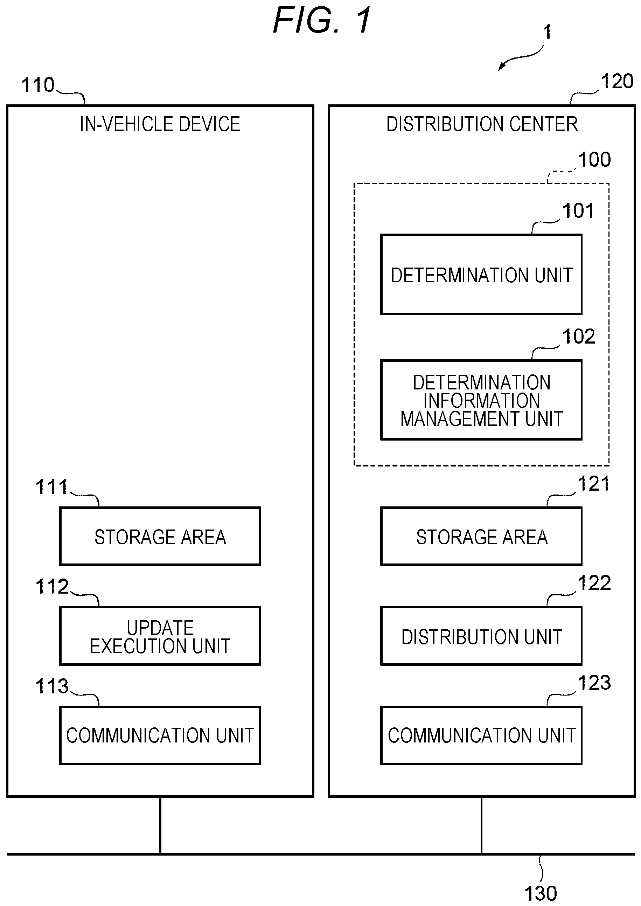

An information processing device 100 of an update system 1 according to a first embodiment will be described with reference to FIGS. 1 to 5.

FIG. 1 is a diagram illustrating a configuration of the update system 1 according to the first embodiment.

The update system 1 is a system that updates a software module provided in an in-vehicle device 110. The update system 1 includes the in-vehicle device 110 including a plurality of software modules including an update target software module, and a distribution center 120 that distributes the software modules to be updated. The in-vehicle device 110 and the distribution center 120 are communicably connected to each other via a wireless communication network 130.

The in-vehicle device 110 includes a processor and a memory, and is configured by, for example, an ECU. The in-vehicle device 110 includes a storage area 111 that stores information of each version of a plurality of software modules provided in the in-vehicle device 110, an update execution unit 112 that executes update of the software modules, and a communication unit 113 that performs data communication with the outside of the in-vehicle device 110. Note that the in-vehicle device 110 may have a configuration other than the configuration illustrated in FIG. 1.

The distribution center 120 includes a server device having a processor and a memory. The distribution center 120 includes an information processing device 100 for updating the update target software module, which is a part of a plurality of software modules provided in the in-vehicle device 110. The information processing device 100 includes a determination unit 101 that determines an update range of software modules in the plurality of software modules, and a determination information management unit 102 that holds and manages information used for determination by the determination unit 101. Furthermore, the distribution center 120 includes a storage area 121 that stores information transmitted from the in-vehicle device 110, a distribution unit 122 that distributes a software module corresponding to the update range determined by the determination unit 101 to the in-vehicle device 110, and a communication unit 123 that performs data communication with the outside of the distribution center 120. Note that the distribution center 120 may have a configuration other than the configuration illustrated in FIG. 1.

When receiving an update request of a software module triggered by an operation of a vehicle user, the in-vehicle device 110 determines that an update trigger of the software module has occurred. When it is determined that the update trigger has occurred, the in-vehicle device 110 transmits, to the distribution center 120, information used for the determination of the determination unit 101. Examples of the information transmitted from the in-vehicle device 110 to the distribution center 120 include information of a combination pattern of versions of a plurality of software modules currently provided in the in-vehicle device 110. The distribution center 120 uses the information of the combination pattern transmitted from the in-vehicle device 110 and the information managed by the determination information management unit 102 to determine the update range in the plurality of software modules provided in the in-vehicle device 110. The distribution center 120 distributes the software module corresponding to the determined update range to the in-vehicle device 110.

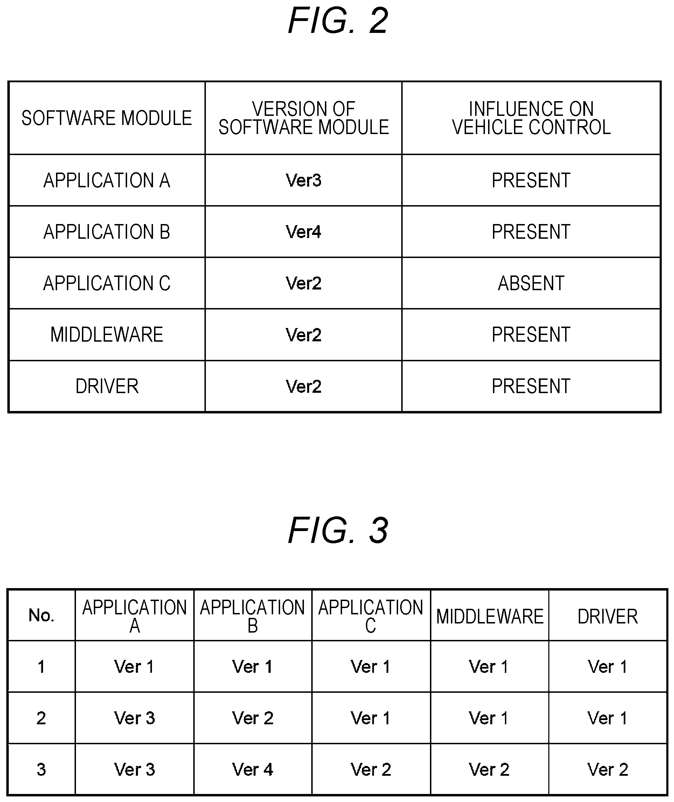

FIG. 2 is a table showing combinations of latest versions of software modules.

As illustrated in FIG. 2, the determination information management unit 102 holds and manages information of the latest version and information regarding the presence or absence of an influence on vehicle control in association with each of the plurality of software modules provided in the in-vehicle device 110. The example of FIG. 2 shows that the in-vehicle device 110 includes "application A", "application B", "application C", "middleware", and "driver" as the plurality of software modules. Then, the example of FIG. 2 shows the latest versions of "application A", "application B", "application C", "middleware", and "driver" are "Ver3", "Ver4", "Ver2", "Ver2", and "Ver2", respectively. Then, the example of FIG. 2 shows the presence or absence of the influence of "application A", "application B", "application C", "middleware", and "driver" on the vehicle control is "present", "present", "absent", "present", and "present", respectively.

Examples of the information regarding the presence or absence of the influence on vehicle control include information indicating whether or not the software module corresponds to a software module of a vehicle control system. Alternatively, examples of the information regarding the presence or absence of the influence on the vehicle control include information indicating whether or not the software module operates in the same processor core as that of the software module of the vehicle control system and may affect the operation of the software module of the vehicle control system. However, the information regarding the presence or absence of the influence on the vehicle control is not limited thereto.

FIG. 3 is a table showing combinations of versions in which the operation of the software modules has been verified.

As illustrated in FIG. 3, regarding a plurality of software modules provided in the in-vehicle device 110, the determination information management unit 102 holds and manages information of a combination pattern of versions in which the operation of each software module has been verified. The example of FIG. 3 shows that the operation of each software module has been verified for a pattern No. 1 of the combination in which the versions of "application A", "application B", "application C", "middleware", and "driver" are "Ver1", "Ver1", "Ver1", "Ver1", and "Ver1", respectively. The pattern No. 1 of this combination can guarantee the operation. The information of the combination pattern of versions in which the operation of each software module has been verified is provided from a developer of the software module.

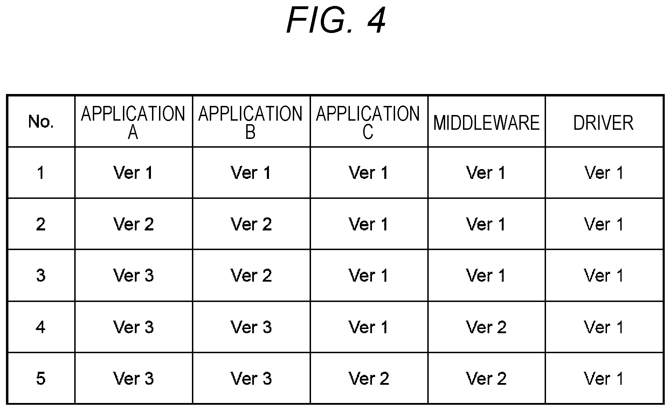

FIG. 4 is a table showing combinations of versions having an operation record of software modules in another in-vehicle device 110.

As illustrated in FIG. 4, the determination information management unit 102 holds and manages information of the combination pattern of versions having the operation record of each software module in the other in-vehicle device 110. The example of FIG. 4 shows that the combination pattern No. 1 in which the versions of "application A", "application B", "application C", "middleware", and "driver" are "Ver1", "Ver1", "Ver1", "Ver1", and "Ver1", respectively, has the operation record of each software module in the other in-vehicle device 110. The other in-vehicle device 110 is, for example, the in-vehicle device 110 mounted on another vehicle shipped to the market. The information of the combination pattern of versions having the operation record of each software module is collected from the other vehicle via the wireless communication network 130. Examples of the trigger for the determination information management unit 102 to collect the information from the other vehicle include occurrence of an update trigger of a software module. In addition, an administrator of the distribution center 120 can directly register, modify, and delete each element of the table illustrated in FIG. 4.

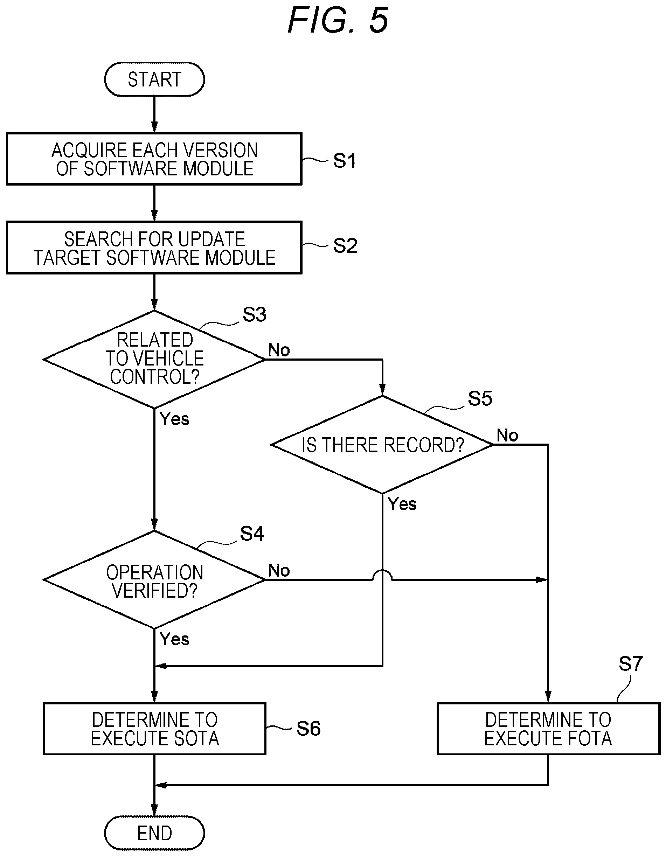

FIG. 5 is a flowchart illustrating processing of the determination unit 101 illustrated in FIG. 1.

In a case where the update trigger of the software module occurs, the in-vehicle device 110 transmits, to the distribution center 120, the information of the combination pattern of the current versions of the software modules provided in the in-vehicle device 110. Then, the determination unit 101 of the distribution center 120 starts the processing illustrated in FIG. 5.

In step S1, the determination unit 101 acquires the information of the current version of each software module provided in the in-vehicle device 110.

In step S2, the determination unit 101 searches for a current update target software module. Specifically, the determination unit 101 compares the combination of the current versions of the software modules acquired in step S1 with the combination of the latest versions of the software modules held by the distribution center 120. Then, the determination unit 101 searches for, as an update target, a software module having a difference in version between both. However, the search may be performed in such a manner that a user specifies the update target software module.

In step S3, the determination unit 101 determines whether or not the update target software module is related to vehicle control. Specifically, the determination unit 101 determines whether or not the operation of the update target software module affects the vehicle control, on the basis of the table held in the determination information management unit 102 and illustrated in FIG. 2. In a case where the operation of the update target software module affects the vehicle control, the determination unit 101 proceeds to step S4. In a case where the operation of the update target software module does not affect the vehicle control, the determination unit 101 proceeds to step S5.

In step S4, the determination unit 101 determines whether or not the combination of the update target software module and other software modules after the update of the update target software module is a combination in which the operation of each software module has been verified. Specifically, on the basis of the table held in the determination information management unit 102 and illustrated in FIG. 3, the determination unit 101 determines whether or not the combination pattern of the version of the update target software module and the versions of the other software modules after the update of the update target software module is a combination pattern of versions in which the operation of each software module has been verified. In a case where the combination pattern of the versions after the update is a combination pattern of versions in which the operation has been verified, the determination unit 101 proceeds to step S6. In a case where the combination pattern of the versions after the update is not a combination pattern of versions in which the operation has been verified, the determination unit 101 proceeds to step S7.

In step S5, the determination unit 101 determines whether or not the combination of the update target software module and the other software modules after the update of the update target software module is a combination having an operation record in another in-vehicle device 110. Specifically, on the basis of the table held in the determination information management unit 102 and illustrated in FIG. 4, the determination unit 101 determines whether or not the combination pattern of the version of the update target software module and the versions of the other software modules after the update of the update target software module is a combination pattern of versions having the operation record in the other in-vehicle device 110. In a case where the combination pattern of the versions after the update is a combination pattern of versions having the operation record in the other in-vehicle device 110, the determination unit 101 proceeds to step S6. In a case where the combination pattern of the version after the update is not a combination pattern of versions having the operation record in the other in-vehicle device 110, the determination unit 101 proceeds to step S7.

In step S6, the determination unit 101 determines that the update execution unit 112 of the in-vehicle device 110 executes SOTA. That is, the determination unit 101 determines that the update target software module is in a current update range. The determination unit 101 notifies the distribution unit 122 of the information of the software module determined as the current update range (the information of the update target software module), and ends the processing illustrated in FIG. 5. The distribution unit 122 distributes, to the in-vehicle device 110, the software module (update target software module) notified from the determination unit 101. The update execution unit 112 of the in-vehicle device 110 executes the update of the software module (update target software module) distributed from the distribution center 120. By this method, the update system 1 can update only some software modules provided in the in-vehicle device 110, but the method of updating only some software modules is not limited to this method.

In step S7, the determination unit 101 determines that the update execution unit 112 of the in-vehicle device 110 executes Firmware updates Over The Air (FOTA). That is, the determination unit 101 determines that all of the plurality of software modules provided in the in-vehicle device 110 are in the current update range. The determination unit 101 notifies the distribution unit 122 of the information of the software modules determined as the current update range (the information on all the software modules provided in the in-vehicle device 110), and ends the processing illustrated in FIG. 5. The distribution unit 122 distributes, to the in-vehicle device 110, the software module notified from the determination unit 101. At this time, the distribution unit 122 distributes, to the in-vehicle device 110, all the software modules provided in the in-vehicle device 110 in the combination of the latest versions. The update execution unit 112 of the in-vehicle device 110 executes the update of the software module distributed from the distribution center 120.

As described above, the information processing device 100 of the update system 1 according to the first embodiment is a device for updating the update target software module, which is a part of the plurality of software modules provided in the in-vehicle device 110. The information processing device 100 of the update system 1 includes the determination unit 101 that determines an update range of software modules in the plurality of software modules. The determination unit 101 determines the update range on the basis of whether or not the combination of the update target software module and other software modules after the update of the update target software module is a combination in which the operation of each software module has been verified.

As a result, when the combination of the software modules after the update is an operation-verified combination, the information processing device 100 according to the first embodiment can determine the update range so as to update only some software modules. In this case, it is not necessary to perform operation verification for all combinations with other software modules after updating some software modules. In addition, when the combination of software modules after the update is not a combination in which the operation has been verified in advance, the information processing device 100 according to the first embodiment can determine the update range so as to update all the software modules provided in the in-vehicle device 110. In this case, the combination of latest software modules to be updated has been verified for operation by the developers of the software modules, and it is not necessary to perform the operation verification in the information processing device 100 or the in-vehicle device 110. Therefore, the information processing device 100 according to the first embodiment can shorten the update time by eliminating the need to perform the operation verification on the combination of software modules after the update, while guaranteeing the operation of the software modules after update. Therefore, the information processing device 100 according to the first embodiment can efficiently update some software modules provided in the in-vehicle device 110 by SOTA while guaranteeing the operation of the software modules after the update.

Furthermore, in the information processing device 100 according to the first embodiment, the determination unit 101 determines the update range on the basis of whether or not the update target software module is related to the vehicle control.

As a result, the information processing device 100 according to the first embodiment can determine the update range in consideration of the influence on the vehicle control, for example, such that in a case where the update target software module is related to the vehicle control, the update is not performed while the vehicle is traveling. Therefore, the information processing device 100 according to the first embodiment can efficiently update some software modules provided in the in-vehicle device 110 by SOTA so as not to hinder the vehicle control, while guaranteeing the operation of the software modules after the update.

Furthermore, in the information processing device 100 according to the first embodiment, the determination unit 101 determines the update range on the basis of whether or not the combination of the software modules after the update is a combination having an operation record in another in-vehicle device 110.

As a result, when the combination of the software modules after the update is a combination having an operation record in another in-vehicle device 110, the information processing device 100 according to the first embodiment can determine the update range so as to update only some software modules even if the operation verification has not been completed. In addition, when the combination of the software modules after the update is not a combination having an operation records in another in-vehicle device 110, the information processing device 100 according to the first embodiment can determine the update range so as to update all the software modules provided in the in-vehicle device 110. Therefore, the information processing device 100 according to the first embodiment can shorten the update time while guaranteeing the operation of the software module after the update. Therefore, the information processing device 100 according to the first embodiment can more efficiently update some software modules provided in the in-vehicle device 110 by SOTA while guaranteeing the operation of the software modules after the update.

Furthermore, in the information processing device 100 according to the first embodiment, the determination unit 101 determines that the update target software module is in the update range in a case where the update target software module is related to the vehicle control and the combination of the software modules after the update is a combination in which the operation has been verified. In a case where the update target software module is related to the vehicle control and the combination of the software modules after the update is not a combination in which the operation has been verified, the determination unit 101 determines that all of the plurality of software modules are in the update range.

As a result, the information processing device 100 according to the first embodiment can efficiently and reliably update some software modules provided in the in-vehicle device 110 by SOTA so as not to hinder the vehicle control, while reliably guaranteeing the operation of the software modules after the update.

Furthermore, in the information processing device 100 according to the first embodiment, the determination unit 101 determines that the update target software module is in the update range in a case where the update target software module is not related to the vehicle control and the combination of the software modules after the update is a combination having an operation record. In a case where the update target software module is not related to the vehicle control and the combination of the software modules after the update is not a combination having an operation record, the determination unit 101 determines that all of the plurality of software modules are in the update range.

As a result, the information processing device 100 according to the first embodiment can efficiently and reliably update some software modules provided in the in-vehicle device 110 by SOTA so as not to hinder the vehicle control, while reliably guaranteeing the operation of the software modules after the update.

Furthermore, in the information processing device 100 according to the first embodiment, the determination unit 101 determines whether or not the combination of the software modules after the update is a combination in which the operation has been verified, on the basis of the combination pattern of the versions of the software modules. The determination unit 101 determines whether or not the combination of the software modules after the update is a combination having an operation record, on the basis of the combination pattern of the versions of the software modules collected from another in-vehicle device 110.

As a result, the information processing device 100 according to the first embodiment can determine the update range by using the existing function of collecting the information of the version of the software module. Therefore, the information processing device 100 according to the first embodiment can efficiently and easily update some software modules provided in the in-vehicle device 110 by SOTA while guaranteeing the operation of the software modules after the update.

### [Second Embodiment]

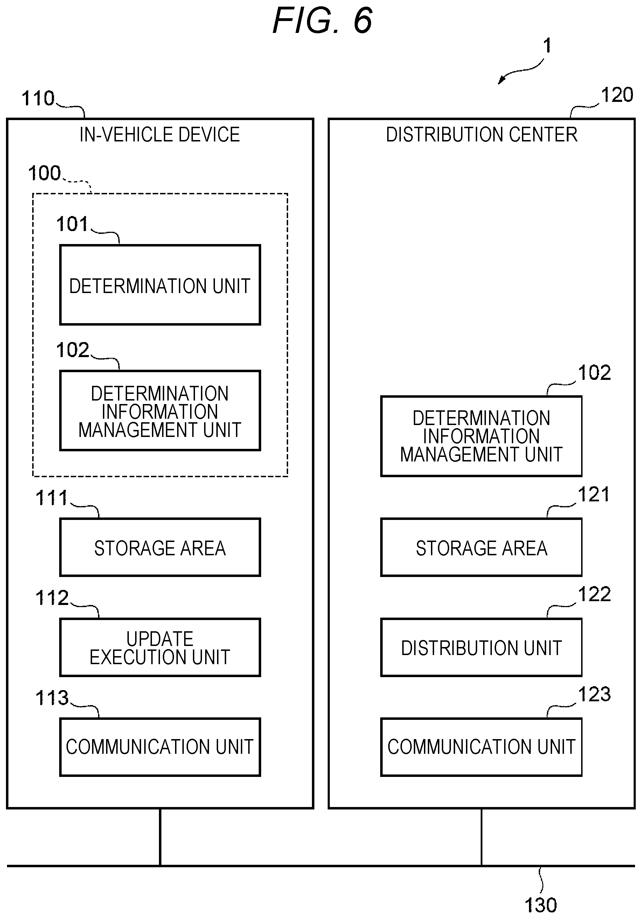

The information processing device 100 of the update system 1 according to a second embodiment will be described with reference to FIG. 6. In the information processing device 100 of the update system 1 according to the second embodiment, the description of the same configuration and operation as those of the first embodiment will be omitted.

FIG. 6 is a diagram illustrating a configuration of the update system 1 according to the second embodiment.

The information processing device 100 of the update system 1 according to the second embodiment may be provided in the in-vehicle device 110 instead of the distribution center 120. In this case, the determination information management unit 102 of the information processing device 100 may be transmitted from the distribution center 120 to the in-vehicle device 110 to be provided in the in-vehicle device 110.

When it is determined that the update trigger has occurred, the in-vehicle device 110 of the second embodiment transmits, to the distribution center 120, information used for the determination of the determination unit 101. Examples of the information transmitted from the in-vehicle device 110 to the distribution center 120 include information of a combination pattern of versions of a plurality of software modules currently provided in the in-vehicle device 110. The distribution center 120 distributes, to the in-vehicle device 110, all the software modules provided in the in-vehicle device 110 in the combination of the latest versions according to the information of combination pattern transmitted from the in-vehicle device 110. The in-vehicle device 110 uses the information of the combination pattern and the information managed by the determination information management unit 102 to determine the update range in the plurality of software modules provided in the in-vehicle device 110. The in-vehicle device 110 executes the update of the software module determined as the current update range.

As described above, even if the information processing device 100 according to the second embodiment is provided in the in-vehicle device 110, as in the first embodiment, the information processing device 100 can efficiently update some software modules provided in the in-vehicle device 110 by SOTA, while guaranteeing the operation of the software modules after the update.

### [Third Embodiment]

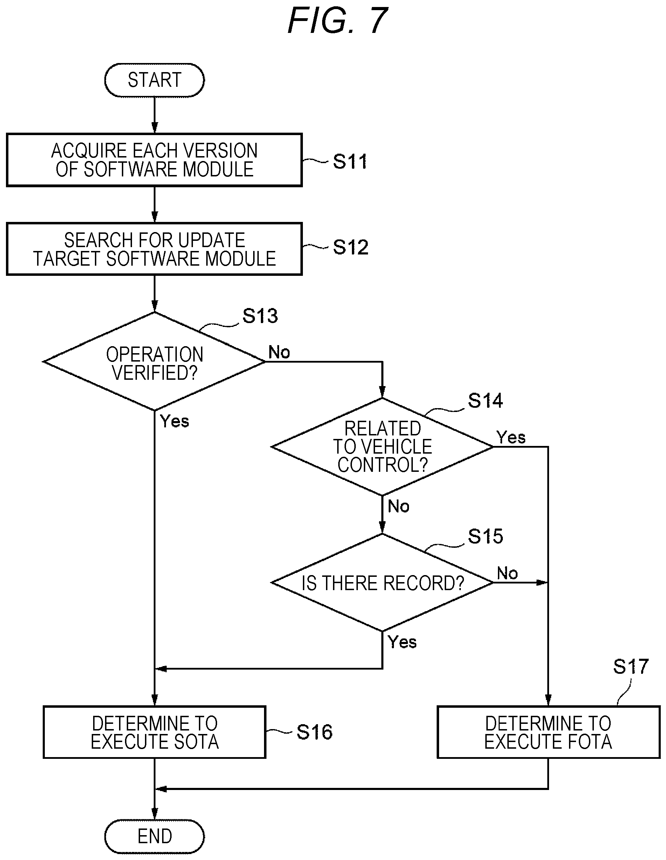

The information processing device 100 of the update system 1 according to a third embodiment will be described with reference to FIG. 7. In the information processing device 100 of the update system 1 according to the third embodiment, the description of the same configuration and operation as those of the first embodiment will be omitted.

FIG. 7 is a flowchart illustrating processing of the determination unit 101 included in the information processing device 100 of the update system 1 according to the third embodiment.

In steps S11 and S12, the determination unit 101 performs processing similar to that in steps S1 and S2 illustrated in FIG. 5.

In step S13, the determination unit 101 determines whether or not the combination of the update target software module and other software modules after the update of the update target software module is a combination in which the operation of each software module has been verified. In a case where the combination of the software modules after the update is a combination in which the operation has been verified, the determination unit 101 proceeds to step S16. In a case where the combination of the software modules after the update is not a combination in which the operation has been verified, the determination unit 101 proceeds to step S14.

In step S14, the determination unit 101 determines whether or not the update target software module is related to vehicle control. In a case where the update target software module is related to the vehicle control, the determination unit 101 proceeds to step S17. In a case where the update target software module is not related to the vehicle control, the determination unit 101 proceeds to step S15.

In step S15, the determination unit 101 determines whether or not the combination of the update target software module and the other software modules after the update of the update target software module is a combination having an operation record in another in-vehicle device 110. In a case where the combination of the software modules after the update is a combination having an operation record, the determination unit 101 proceeds to step S16. In a case where the combination of the software modules after the update is not a combination having an operation record, the determination unit 101 proceeds to step S17.

In steps S16 and S17, the determination unit 101 performs processing similar to that in steps S6 and S7 illustrated in FIG. 5.

As described above, even if the order of steps S13 to S15 is different from that of the first embodiment, as in the first embodiment, the information processing device 100 according to the third embodiment can efficiently update some software modules provided in the in-vehicle device 110 by SOTA, while guaranteeing the operation of the software modules after the update.

Note that the present invention is not limited to the above-described embodiments, and includes various modifications. For example, the above-described embodiments have been described in detail for easy understanding of the present invention, and are not necessarily limited to those having all the described configurations. In addition, a part of the configuration of a certain embodiment can be replaced with the configuration of another embodiment, and the configuration of another embodiment can be added to the configuration of a certain embodiment. In addition, it is possible to add, delete, and replace other configurations for a part of the configuration of each embodiment.

In addition, some or all of the above-described configurations, functions, processing units, processing means, and the like may be achieved by hardware, for example, by designing with an integrated circuit. In addition, each of the above-described configurations, functions, and the like may be achieved by software by a processor interpreting and executing a program for achieving each function. Information such as a program, a table, and a file for achieving each function can be stored in a recording device such as a memory, a hard disk, and a solid state drive (SSD), or a recording medium such as an IC card, an SD card, and a DVD.

In addition, the control lines and the information lines indicate what is considered to be necessary for the description, and do not necessarily indicate all the control lines and the information lines on the product. In practice, it may be considered that almost all the configurations are connected to each other.

### Reference Signs List

- 1: update system
- 100: information processing device
- 101: determination unit
- 110: in-vehicle device

## Claims

1. An information processing device of an update system for updating an update target software module which is a part of a plurality of software modules provided in an in-vehicle device, the information processing device comprising
a determination unit that determines an update range of a software module in the plurality of software modules, wherein
the determination unit determines the update range on a basis of whether or not a combination of the update target software module and other software modules after update of the update target software module is a combination in which an operation of each software module has been verified.

2. The information processing device of the update system according to claim 1, wherein
the determination unit determines the update range on the basis of whether or not the update target software module is related to vehicle control.

3. The information processing device of the update system according to claim 2, wherein
the determination unit determines the update range on the basis of whether or not the combination after the update is a combination having an operation record in another in-vehicle device.

4. The information processing device of the update system according to claim 2, wherein
the determination unit
determines that the update target software module is in the update range in a case where the update target software module is related to the vehicle control and the combination after the update is a combination in which an operation has been verified, and
determines that all of the plurality of software modules are in the update range in a case where the update target software module is related to the vehicle control and the combination after the update is not the combination in which the operation has been verified.

5. The information processing device of the update system according to claim 3, wherein
the determination unit
determines that the update target software module is in the update range in a case where the update target software module is not related to the vehicle control and the combination after the update is a combination having an operation record, and
determines that all of the plurality of software modules are in the update range in a case where the update target software module is not related to the vehicle control and the combination after the update is not the combination having the operation record.

6. The information processing device of the update system according to claim 3, wherein
the determination unit
determines whether or not the combination after the update is a combination in which an operation has been verified, on a basis of a combination pattern of versions of the software modules, and
determines whether or not the combination after the update is a combination having an operation record, on the basis of the combination pattern of versions collected from another in-vehicle device.
